# EUROPÄISCHE PATENTSCHRIFT

(11) **EP 1 247 731 B1**
(45) Veröffentlichungstag und Bekanntmachung des Hinweises auf die Patenterteilung: **05.07.2006**
(21) Anmeldenummer: 02006974.6
(22) Anmeldetag: 27.03.2002
(51) Int. Cl.: B62K 25/30, F16F 1/54, F16F 15/126

(54) **Lager zur begrenzt drehbeweglichen Lagerung von Bauteilen**
Bearing for limited rotational movement support of components
Palier pour support de composants à rotation limitée

(30) Priorität: 03.04.2001 DE 10116603
(43) Veröffentlichungstag der Anmeldung: 09.10.2002
(73) Patentinhaber: ContiTech Vibration Control GmbH, 30165 Hannover (DE)
(72) Erfinder: Eller, Gerhard, 30989 Gehrden (DE); Hahnkamm, Jörg, 30926 Seelze (DE); Lantermann, Ulrich, 56244 Weidenhahn (DE)
(74) Vertreter: Finger, Karsten

(56) Entgegenhaltungen:
- AU-A- 1 650 483
- DE-C- 753 841
- DE-U- 8 817 269

## Beschreibung

Die Erfindung betrifft ein Lager zur begrenzt drehbeweglichen Lagerung von Bauteilen gemäß Oberbegriff des Anspruchs 1.

Die Lagerung und Führung der Hinterradschwinge eines Fahrrades im Fahrradrahmen ist bisher vielgestaltig ausgeführt worden.

DE-U-8 817 269 zeigt einlager gemäß Oberbegriff des Anspruchs 1.

So ist aus der DE 197 45 380 A1 ein Fahrrad mit einer Federvorrichtung bekannt, die wenigstens eine Torsionsfeder aufweist, die einen Außenkörper und einen in diesem drehbar gelagerten Innenteil besitzt. Dabei ist der Außenkörper und der Innenteil jeweils mit einem Fahrradteil verbunden.

Weiterhin wird in der PS 753 841 ein Fahrrad mit um die Tretkurbelachse schwenkbarem Hinterrad beschrieben, bei dem das Hinterrad durch einen von seiner Nabe ausgehenden U-förmigen Bügel um die Längsachse des Tretkurbellagers schwenkbar gemacht und gegen den Fahrradrahmen abgefedert ist. Zur Realisierung dieser Funktion kommt eine konzentrisch zum Tretkurbellager angeordnete und mit dem Fahrradrahmen verbundene Gummitorsionsfeder zum Einsatz.

Vorgenannte Lösung ist für kurze Federwege geeignet, unterliegt jedoch bei Dauerbelastung einem erhöhten Verschleiß.

Der Erfindung liegt daher die Aufgabe zugrunde, ein Lager der eingangs beschriebenen Art zu schaffen, das bei einfachem Aufbau dauerbelastbar und in einem vergleichsweise großen Drehwinkelbereich einsetzbar ist.

Erfindungsgemäß weist das Zwischenelement des eingangs genannten Lagers eine axiale und eine radiale Komponente auf, wobei die elastomere Zwischenschicht lagerzentrumsfern im Wesentlichen radial und lagerzentrumsnah im Wesentlichen axial verläuft. Das Zwischenelement gewährleistet einen ständigen seitlichen Abstand zwischen Lagerkörper und Drehkörper.

Die Erfindung ist mit dem Vorteil verbunden, dass eine Verdrehung der Teile des Lagers zueinander über einen großen Drehwinkelbereich möglich ist, ohne negativen Einfluss auf die Haltbarkeit des Lagers. Auch zeichnet sich das Lager durch eine hohe Quersteifigkeit aus, womit ein Einsatz beispielsweise zur Lagerung, Federung und Dämpfung der Hinterradschwinge eines Fahrrades bei exakter Spurführung möglich ist.

Verläuft die Elastomerschicht lagerzentrumsfern im Wesentlichen radial und lagerzentrumsnah im Wesentlichen axial, kann ein ausgewogenes Torsionsverhalten des Lagers mit einer hohen Querkraftstabilität verbunden werden.

In bevorzugter Ausführung der Erfindung handelt es sich bei dem radial estreckten Zwischenelement um eine Elastomerschicht, die eine Verknüpfung der geforderten Elastizitätseigenschaften mit einem Dämpfungsanteil erlaubt. Soll die Materialbeanspruchung innerhalb der Elastomerschicht bei Verdrehung der Lagerbestandteile zueinander vergleichmäßigt werden, so ist zweckmäßig vorgesehen, dass die Dicke der Elastomerschicht mit sich vergrößerndem Abstand vom Lagerzentrum zunimmt.

Der Lagerkörper und der Drehkörper können zueinander korrespondierend so ausgeführt sein, dass eine von einer ebenen Schicht abweichende wellenförmige Elastomerschicht entsteht. Über eine solche Maßnahme wird die Möglichkeit geschaffen, die Einfeder-Kennlinie zu beeinflussen und einen progressiven Anstieg der bei Einfedervorgängen in der Elastomerverbindung hervorgerufenen Reaktionskraft zu erreichen.

Eine weitere qualitative Verbesserung der Lagereigenschaften tritt ein, wenn ein weiterer Lagerkörper oder zwischen dem Drehkörper und den Lagerkörpern zwei Elastomerschichten existieren. Zweckmäßig ist dabei weiterhin, eine symmetrische Anordnung der Elastomerschichten zueinander, bezogen auf den als Lagerkörper oder Drehkörper ausgeführten Innenkörper des Lagers, vorzusehen.

In weiterer bevorzugter Ausführung der Erfindung ist eine Einrichtung zur Erzeugung einer Vorspannung in der Elastomerschicht vorgesehen. Mit einer solchen Einrichtung kann die Einfederkraft-Kennlinie gezielt beeinflusst werden.

Als Einrichtung zur Vorspannungserzeugung kann eine Gewindebuchse zum Einsatz kommen, deren axiale Längenänderung der Einstellung des Grades der Vorspannung dient.

Die Erfindung soll nachfolgend anhand eines Ausführungsbeispiels näher erläütert werden. Es zeigen
- Fig. 1: eine perspektivische Ansicht eines erfindungsgemäßen Lagers,
- Fig. 2: eine stirnseitige Ansicht einer aus zwei Lagern gemäß Fig. 1 gebildeten Lagereinheit für die Hinterradschwinge eines Fahrrades,
- Fig. 3: ein Lager gemäß Fig. 2 in Einbausituation und
- Fig. 4: eine Darstellung gemäß Fig. 3 mit am Lager befestigter Hinterradschwinge eines Fahrrades.

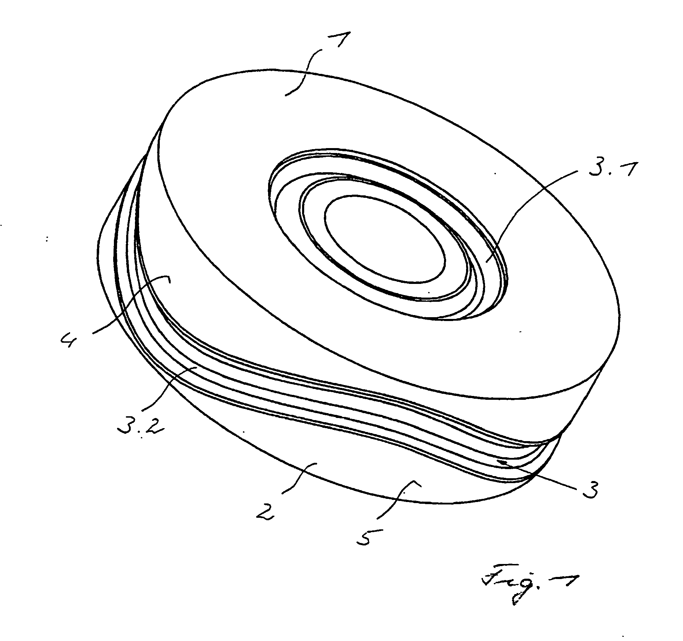

Das in Fig. 1 dargestellte erfindungsgemäße Lager besteht aus einem Lagerkörper 1, einem Drehkörper 2 und einem, eine begrenzte Drehbewegung zwischen den Körpern 1, 2 ermöglichenden Zwischenelement in Form einer Elastomerschicht 3. Die Elastomerschicht 3 umfasst einen im Wesentlichen axial verlaufenden Bereich 3.1 und einen sich im Wesentlichen radial erstreckenden Bereich 3.2. Letzterer reicht bis an die Stirnseiten 4,5 von Lagerkörper 1 und Drehkörper 2, so dass ein direkter Kontakt zwischen Lagerkörper 1 und Drehkörper 2 ausgeschlossen ist und durch axiale Krafteinwirkung eine Vorspannung der Elastomerschicht 3 erreicht werden kann. Zur Einstellung des nutzbaren Drehwinkelsektors und des Kraftverlaufes in diesem Drehwinkelsektor ist der radiale Bereich 3.2 wellenförmig zwischen Lagerkörper 1 und Drehkörper 2 eingebettet. Über eine Änderung der Wellenform, die beispielsweise durch eine Änderung des Krümmungsradius der von außen sichtbaren Wellenkontur bewirkt wird, besteht die Möglichkeit, die Größe des Drehwinkelsektors und den Kraft-Kennlinienverlauf zu beeinflussen.

Als Grundmaterial für die Elastomerschicht 3 kommt vorzugsweise Kautschuk zum Einsatz, der nach Vulkanisation als Gummi haftend mit dem Lagerkörper 1 und dem Drehkörper 2 verbunden ist.

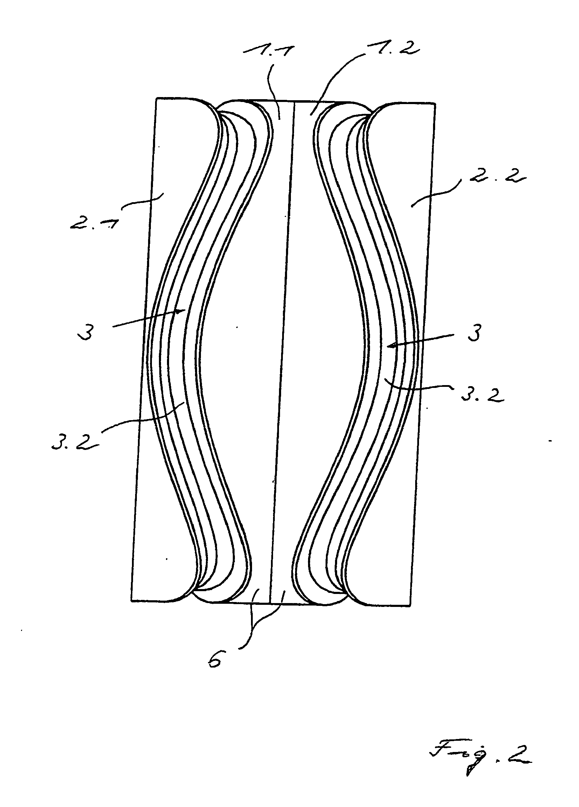

Die in Fig. 2 dargestellte und für die Lagerung einer Hinterradschwinge eines Fahrrades bestimmte Lagereinheit setzt sich aus zwei Lagern gemäß Fig. 1 derart zusammen, dass die gekrümmten radialen Bereiche 3.2 der Elastomerschichten 3, bezogen auf die Kontaktebene der beiden Lager, im Wesentlichen symmetrisch verlaufen, wie für die außenliegenden Oberflächen der Elastomerschichten 3 in Fig. 2 erkennbar. Zwischen den Lagerkörpern 1.1 und 1.2 besteht eine starre Verbindung, so dass der so gebildete Innenkörper 6 relativ zu den Drehkörpern 2.1 und 2.2 und umgekehrt die Drehkörper 2.1 und 2.2 einzeln oder gemeinsam relativ zum Innenkörper 6 begrenzt verdrehbar sind.

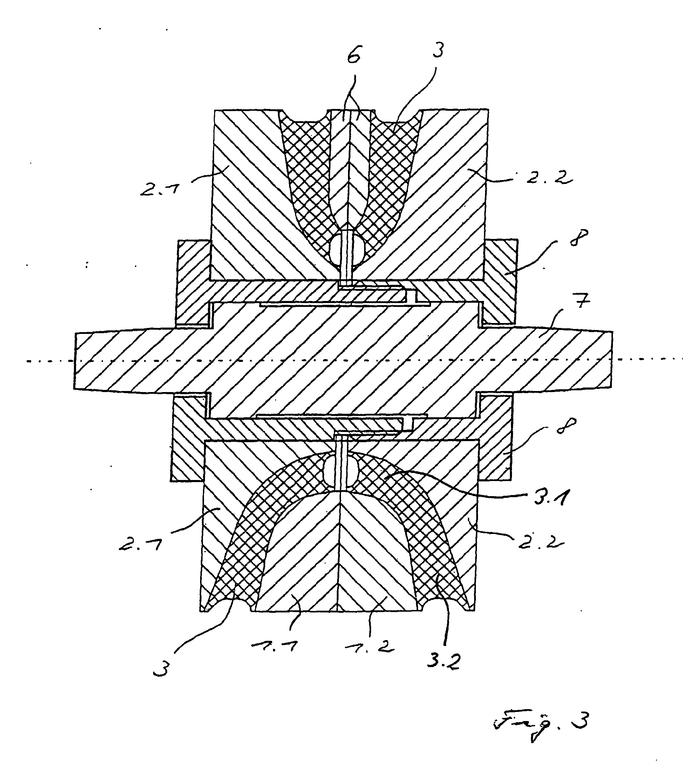

In Veranschaulichung einer Einbausituation ist in Fig. 3 eine Lagereinheit gemäß Fig. 2 dargestellt, die eine Tretlagerwelle 7 eines Fahrrades umschließt. Zwischen der Tretlagerwelle 7 und der Lagereinheit ist eine Gewindebuchse 8 vorgesehen, mittels derer die Lagereinheit vorgespannt werden kann, um die Lagereinheit auf die konkreten Belastungsverhältnisse einzustellen. Der Aufbau der Gewindebuchse 8 ist derart gewählt, dass im Zustand einer vorgespannten Lagereinheit - in Fig. 3 ist ein spannungsfreier Zustand dargestellt - die freie Drehbeweglichkeit der Tretlagerwelle 7 gewährleistet ist.

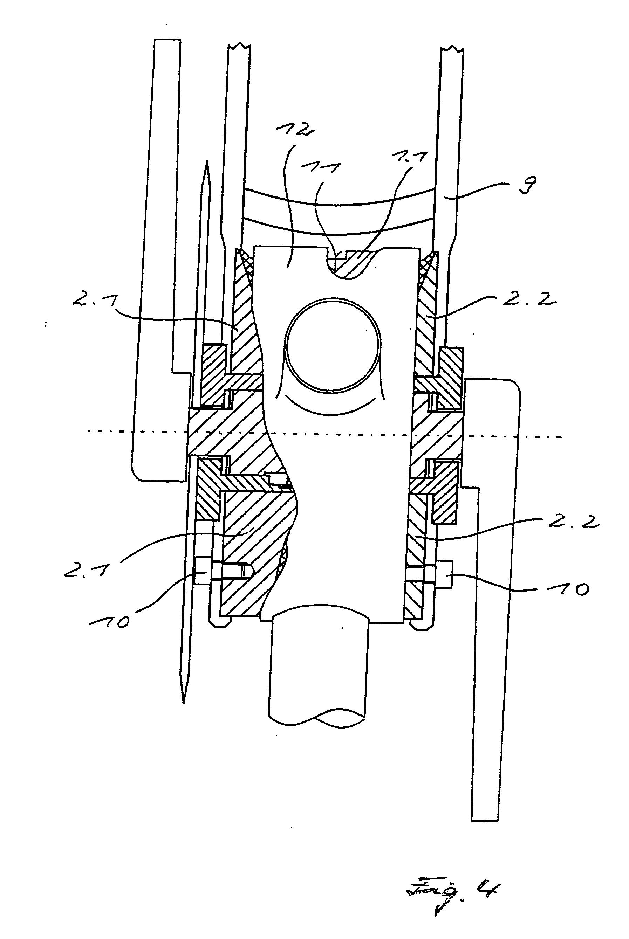

Mit den Drehkörpern 2.1 und 2.2 ist, wie aus Fig. 4 erkennbar, die Hinterradschwinge 9 eines hier nicht dargestellten Fahrrades mittels Schrauben 10 verbunden. Weiterhin weisen die Lagerkörper 1.1 und 1.2 eine Ausnehmung 11 auf, in die ein am Fahrradrahmen 12 vorgesehener Vorsprung eingreift, womit die Verdrehsicherheit der Lagerkörper 1.1 und 1.2 relativ zum Fahrradrahmen 12 gegeben ist.

Bei Benutzung des Fahrrades wirkt den Einfederungsvorgängen eine progressiv ansteigende, von der Elastomerverbindung aufgebrachte Kraft entgegen. Infolge des speziellen, symmetrischen Aufbaues der Lagereinheit wird eine exakte Spurführung des Hinterrades des Fahrrades gesichert.

## Patentansprüche

1. Lager zur begrenzt drehbeweglichen Lagerung von Bauteilen mit einem Lagerkörper (1), einem zum Lagerkörper (1) beabstandeten, auslenkbaren Drehkörper (2) und einem, mit dem Lagerkörper (1) und dem Drehkörper (2) verbundenen, eine begrenzte Drehbewegung ermöglichenden elastomeren Zwischenelement (3), durch das ein direkter Kontakt zwischen dem Lagerkörper (1, 1.1, 1.2) und dem Drehkörper (2, 2.1, 2.2) auch bei dynamischer Belastung des Lagers unterbleibt
**dadurch gekennzeichnet,**
**dass** das Zwischenelement (3) eine axiale (3.1) und eine radiale Komponente (3.2) aufweist,
**dass** es sich bei dem Zwischenelement um eine Elastomerschicht (3) handelt,
**dass** die Elastomerschicht (3) lagerzentrumsfern im Wesentlichen radial und lagerzentrumsnah im Wesentlichen axial verläuft.

2. Lager nach Anspruch 1, **dadurch gekennzeichnet, dass** die Dicke der Elastomerschicht (3) mit sich vergrößerndem Abstand vom Lagerzentrum zunimmt.

3. Lager nach Anspruch 1 oder 2, **dadurch gekennzeichnet, dass** der Lagerkörper (1) und der Drehkörper (2) zueinander korrespondierend so ausgeführt sind, dass eine von einer ebenen Schicht abweichende wellenförmige Elastomerschicht (3) entsteht.

4. Lager nach Anspruch 1 oder 3, **dadurch gekennzeichnet, dass** ein weiterer Lagerkörper (1.1, 1.2) oder Drehkörper (2.1, 2.2) vorgesehen ist, so dass zwischen dem Lagerkörper (1) und den Drehkörpern (2.1, 2.2) bzw. zwischen dem Drehkörper(2) und den Lagerkörpern (1.1, 1.2) zwei Elastomerschichten (3) existieren.

5. Lager nach Anspruch 4, **gekennzeichnet durch** eine symmetrische Anordnung der Elastomerschichten (3) zueinander bezogen auf den als Lagerkörper oder Drehkörper ausgeführten Innenkörper (6) des Lagers.

6. Lager nach Anspruch 1, **dadurch gekennzeichnet, dass** eine Einrichtung (8) zur Erzeugung einer Vorspannung in der Elastomerschicht (3) vorgesehen ist.

7. Lager nach Anspruch 6, **dadurch gekennzeichnet, dass** es sich bei der Einrichtung zur Vorspannungserzeugung um eine Gewindebuchse (8) handelt, deren axiale Längenänderung der Einstellung des Grades der Vorspannung dient.

## Claims

1. Bearing for limited rotational movement support of components, with a bearing body (1), a deflectable rotational body (2), which is kept at a distance from the bearing body (1), and an elastomeric intermediate element (3), which is connected to the bearing body (1) and the rotational body (2), permits a limited rotational movement and prevents direct contact between the bearing body (1, 1.1, 1.2) and the rotational body (2, 2.1, 2.2) even under dynamic loading of the bearing, **characterized in that** the intermediate element (3) has an axial component (3.1) and a radial component (3.2), **in that** the intermediate element is an elastomer layer (3), **in that** the elastomer layer (3) runs essentially radially remote from the bearing centre and essentially axially close to the bearing centre.

2. Bearing according to Claim 1, **characterized in that** the thickness of the elastomer layer (3) increases with increasing distance from the bearing centre.

3. Bearing according to Claim 1 or 2, **characterized in that** the bearing body (1) and the rotational body (2) are made to correspond to one another in such a way that an undulating elastomer layer (3) deviating from a planar layer is created.

4. Bearing according to Claim 1 or 3, **characterized in that** a further bearing body (1.1, 1.2) or rotational body (2.1, 2.2) is provided, so that two elastomer layers (3) exist between the bearing body (1) and the rotational bodies (2.1, 2.2) and between the rotational body (2) and the bearing bodies (1.1, 1.2), respectively.

5. Bearing according to Claim 4, **characterized by** a symmetrical arrangement of the elastomer layers (3) in relation to one another with respect to the inner body (6) of the bearing configured as the bearing body or rotational body.

6. Bearing according to Claim 1, **characterized in that** a device (8) for producing a prestress in the elastomer layer (3) is provided.

7. Bearing according to Claim 6, **characterized in that** the device for producing a prestress is a threaded bush (8), the axial change in length of which serves for setting the degree of prestressing.

## Revendications

1. Palier pour le support de composants à mobilité limitée en rotation, avec un corps de palier (1), un corps rotatif (2) espacé du corps de palier (1) et pouvant être dévié et un élément intermédiaire (3) élastomère, permettant un mouvement de rotation limité, connecté au corps de palier (1) et au corps rotatif (2), grâce auquel un contact direct entre le corps de palier (1, 1.1, 1.2) et le corps rotatif (2, 2.1, 2.2) n'a pas lieu même dans le cas de sollicitation dynamique du palier,
**caractérisé en ce que**
l'élément intermédiaire (3) présente une composante axiale (3.1) et une composante radiale (3.2),
**en ce que** l'élément intermédiaire est une couche élastomère (3),
**en ce que** la couche élastomère (3) s'étend axialement à l'écart du centre du palier essentiellement radialement et à proximité du centre du palier essentiellement axialement.

2. Palier selon la revendication 1, **caractérisé en ce que** l'épaisseur de la couche élastomère (3) augmente avec l'accroissement de la distance depuis le centre du palier.

3. Palier selon la revendication 1 ou 2, **caractérisé en ce que** le corps de palier (1) et le corps rotatif (2) sont réalisés de manière correspondant l'un à l'autre de telle sorte qu'une couche élastomère (3) de forme ondulée s'écartant d'une couche plane soit formée.

4. Palier selon la revendication 1 ou 3, **caractérisé en ce qu'**un corps de palier supplémentaire (1.1, 1.2) ou un corps rotatif supplémentaire (2.1, 2.2) est prévu, de sorte qu'entre le corps de palier (1) et les corps rotatifs (2.1, 2.2), ou entre le corps rotatif (2) et les corps de palier (1.1, 1.2) existent deux couches élastomères (3).

5. Palier selon la revendication 4, **caractérisé par** un agencement symétrique des couches élastomères (3) l'une par rapport à l'autre par rapport au corps interne (6) du palier réalisé sous forme de corps de palier ou de corps rotatif.

6. Palier selon la revendication 1, **caractérisé en ce qu'**il est prévu un dispositif (8) pour la production d'une précontrainte dans la couche élastomère (3).

7. Palier selon la revendication 6, **caractérisé en ce que** le dispositif pour la production d'une précontrainte est une douille filetée (8), dont la variation de longueur axiale sert à ajuster le degré de précontrainte.
